# EUROPÄISCHE PATENTSCHRIFT

(11) **EP 2 084 067 B1**
(45) Veröffentlichungstag und Bekanntmachung des Hinweises auf die Patenterteilung: **25.02.2015**
(21) Anmeldenummer: 07822245.2
(22) Anmeldetag: 06.11.2007
(51) Int. Cl.: B65B 21/12, B65G 47/90

(54) **PACKTULPE ZUM KOPFSEITIGEN ERGREIFEN VON INSBESONDERE DURCH EINEN VERSCHLUSS VERSCHLIESSBAREN FLASCHEN**
PACKING TULIP FOR GRIPPING THE TOP SIDE OF BOTTLES, PARTICULARLY BOTTLES WHICH CAN BE SEALED WITH A CAP
TULIPE DE PREHENSION PERMETTANT UNE SAISIE COTE GOULOT, EN PARTICULIER DE BOUTEILLES POUVANT ETRE FERMEES PAR UN BOUCHON

(30) Priorität: 09.11.2006 DE 202006017247 U; 26.01.2007 DE 202007001164 U
(43) Veröffentlichungstag der Anmeldung: 05.08.2009
(73) Patentinhaber: Zodrow, Rudolf, 40235 Düsseldorf (DE)
(72) Erfinder: Zodrow, Rudolf, 40235 Düsseldorf (DE)
(74) Vertreter: Lotze, Rüdiger
(86) Internationale Anmeldenummer: PCT/EP2007/061922
(87) Internationale Veröffentlichungsnummer: WO 2008/055893

(56) Entgegenhaltungen:
- CH-A- 434 090
- DE-A1- 2 046 835
- DE-B- 1 036 749
- DE-U1- 29 914 444
- DE-U1-202004 017 404
- DE-U1-202004 020 036

## Beschreibung

Die Erfindung betrifft eine Packtulpe zum kopfseitigen Ergreifen von insbesondere durch einen Verschluss verschließbaren Flaschen, die in einem topfförmigen Gehäuse einen hülsenförmigen, mit seinem vorderen Ende am Rand des Gehäuses abgestützten, elastisch verformbaren Einsatz und einen auf den Einsatz an dessen rückseitigem Ende mit einer axialen Druckkraft einwirkenden Stellkolben aufweist, der mit einer randseitigen Dichtlippe innen an der Wand des einen zugehörigen, mit einem Druckmedium beaufschlagbaren Druckraum bildenden topfförmigen Gehäuses anliegt, wobei der Stellkolben an seinem Umfang auf der dem Druckraum abgewandten Seite der Dichtlippe einen radialen Absatz aufweist, dem als axiale Hubbegrenzung des Stellkolbens ein gehäusefester Anschlag im Bereich des Einsatzes zugeordnet ist.

Packtulpen dieser oder ähnlicher Art sind in verschiedenen Ausführungen bekannt. Sie sind in der Regel mit anderen gleichartigen Packtulpen zu einer Gruppe in einem Packkopf zusammengefasst und dienen zum kopfseitigen Ergreifen von Flaschen in Flaschenverpackungsmaschinen. Durch den Packkopf werden die Packtulpen gemeinsam auf eine entsprechende Gruppe von Flaschen abgesenkt. Dabei tauchen die Flaschen mit ihren Köpfen in die einzelnen Packtulpen ein. Die Packtulpen sind dafür ausgelegt, bei entsprechender Ansteuerung die Flaschen durch radiale Klemmung zu ergreifen. Die ergriffenen Flaschen einer Gruppe können dann mit dem Packkopf angehoben und versetzt werden, beispielsweise in einen mit Stellplätzen für die einzelnen Flaschen versehenen Kasten oder freistehend auf ein Transportband.

Für die Funktion der ansteuerbaren Packtulpen ist nicht nur wichtig, dass sie die Flaschen durch radiale Klemmung des Flaschenkopfes sicher ergreifen, sondern auch, dass das Ergreifen möglichst schonend erfolgt. Dies gilt vor allem dann, wenn der Flaschenkopf eine besondere Ausstattung aufweist, beispielsweise foliiert ist. Außerdem soll die Packtulpe möglichst nahe an ihrem vorderen Ende den Flaschenkopf erfassen, so dass der Flaschenkopf nur wenig in die Packtulpe einzutauchen braucht, um sicher ergriffen werden zu können, aber auch um die Flasche schnell freizugeben, was vor allem beim Aufsetzen freistehender Flaschen, insbesondere leerer Kunststoffflaschen, auf ein Transportband die Gefahr des Umkippens vermindert. Für eine schnelle Freigabe ist auch wichtig, dass der Stellkolben und der Einsatz durch den verformten Einsatz schnell zurückgeführt werden. Schließlich sollen die Mittel, die unmittelbar mit dem Flaschenkopf in Berührung kommen, eine möglichst lange Standzeit haben.

Bei einer bekannten Packtulpe der eingangs genannten Art (DE 41 37 362 C2) sind der Stellkolben und der Einsatz in einer bevorzugten Ausführung einteilig ausgeführt. Um beim Stauchen des Einsatzes eine kontrollierte gleichmäßige Wölbung des Einsatzes in radialer Richtung zu begünstigen, ist die Wand des Einsatzes in Umfangsrichtung mit wechselnder Wandstärke ausgerichtet, so dass sich beim Stauchen gezielte Einfaltungen bilden. Die axiale Druckkraft des Stellkolbens wird allerdings vollständig auf den Einsatz übertragen. Das bedeutet, dass die Klemmkraft des sich nach innen aufwölbenden Einsatzes auf den Flaschenkopf unmittelbar von der axialen Druckkraft des Stellkolbens abhängt.

Bei einer gegenüber der gattungsgemäßen Packtulpe abgewandelten Packtulpe (DE 43 25 556 C1) ist der Druckraum durch eine zwischen dem Stellkolben und der Gehäusewand vorgesehene flanschartige Balgendichtung abgeschlossen. Eine solche Dichtung erlaubt nur einen vergleichsweise kleinen Stellweg. Zur axialen Hubbegrenzung des Stellkolbens ist im Stellkolben eine Versteifungsplatte eingearbeitet, die mit ihrem Randbereich den Stellkolben radial nach außen überragt. Dieser Randbereich wirkt mit einem gehäusefesten Anschlag zum Zwecke der Hubbegrenzung zusammen. Die Herstellung und die Montage eines solchen Einsatzes und Druckkolbens ist wegen der einzuarbeitenden Versteifungsplatte und der flanschartigen Balgendichtung recht aufwendig.

Aus dem Stand der Technik der DE 20 2004 017 404 U1 ist eine weitere gattungsgemäße Packtulpe bekannt, bei der das topfförmige Gehäuse zweiteilig mit einem den Stellkolben aufnehmenden hinteren Gehäuseteil und einem in den hinteren Gehäuseteil eingeschraubten vorderen Gehäuseteil ausgebildet ist. Der Stellkolben und der hülsenförmige, elastisch verformbare Einsatz sind als separate Bauteile ausgebildet, wobei der Stellkolben als weiteres separates Bauteil eine umlaufende Dichtlippe aufweist. Zur Begrenzung des Hubweges des Stellkolbens ist in dem zweiteiligen Gehäuse ein radialer Anschlag vorgesehen, der durch die äußere Kante des Schraubabschnittes des in den hinteren Gehäuseteil eingeschraubten vorderen Gehäuseteils gebildet wird.

Ferner ist aus dem Stand der Technik der DE 299 14 444 U1 bekannt, den radialen Absatz des Stellkolbens einer Packtulpe einteilig mit einer umlaufenden, randseitigen Dichtlippe auszubilden.

Die deutsche Auslegeschrift DE 1 036 749 schließlich beschreibt eine Packtulpe, bei der der Stellkolben und der hülsenförmige Einsatz einteilig ausgebildet sind. Dabei verringert sich die Wandstärke der Wand des hülsenförmigen, elastischen Einsatzes von dessen stellkolbenseitigen Ende bis zu einem radial nach außen weisenden Kragen.

Der Erfindung liegt die Aufgabe zugrunde, eine Packtulpe zu schaffen, deren Einsatz einen geringen Fertigungs- und Montageaufwand erfordert und die ein sicheres, exaktes und schonendes Ergreifen einer Flasche gewährleistet.

Diese Aufgabe wird erfindungsgemäß mit einer Packtulpe der eingangs genannten Art dadurch gelöst, dass die Dichtlippe und der Absatz als integraler Kragen des Stellkolbens ausgebildet sind, wobei der elastische Einsatz an seinem unteren Rand einen radial nach außen weisenden Kragen aufweist, wobei die Wand des Einsatzes mit in Umfangsrichtung abwechselnd unterschiedlicher Wandstärke ausgebildet ist, wobei sich die Wandstärke der verstärkten Wandbereiche der Wand vom stellkolbenseitigen Ende des Einsatzes in Richtung seines dem Flaschenkopf zugewandten unteren Randes bis zum radial nach außen weisenden Kragen verringert und wobei der Stellkolben innen hohl ausgebildet ist und radiale Rippen zur Zentrierung des Flaschenkopfes beim Ausstülpen der Packtulpe aufweist.

Bei der erfindungsgemäßen Packtulpe wird wegen der axialen Hubbegrenzung des Stellkolbens die Stauchung des Einsatzes und damit auch dessen radiale Aufwölbung begrenzt. Das führt nicht nur zu einer begrenzten Belastung des Materials des Einsatzes, sondern führt auch wegen der begrenzten Anpresskraft auf den Flaschenkopf zu einer schonenden Behandlung eines insbesondere foliierten Flaschenkopfes. Die Herstellung des Einsatzes und des Druckkolbens ist einfach, weil die als Dichtlippe ausgebildete Dichtung zwischen Rohrkolben und Gehäusewand angeformt sein kann und nicht mit der Gehäusewand fest verbunden ist.

Um eine Verformung oder ein Kippen des Stellkolbens bei seiner Druckbeaufschlagung mit der Folge zu vermeiden, dass die gleichmäßige Anlage der Dichtlippe am Gehäuse beeinträchtigt wird, hat der Stellkolben nach einer Ausgestaltung der Erfindung einen kegelförmigen, insbesondere kegelstumpfförmigen Boden.

Vorteilhaft für die Dichtwirkung der Dichtlippe wirkt sich aus, wenn der Stellkolben im Bereich der Dichtlippe eine erhöhte radiale Steifigkeit aufweist. Erfindungsgemäß wird dies bei einer angeformten Dichtlippe mit geringem Herstellungsaufwand dadurch erreicht, dass die Dichtlippe und der Absatz als integraler Kragen des Stellkolbens ausgebildet sind.

Der gehäusefeste Anschlag kann an der Gehäusewand selbst ausgebildet sein. Nach einer bevorzugten Ausführung ist er aber an der Stirnseite einer im Gehäuse eingesetzten Führungshülse ausgebildet, an deren Innenseite der Einsatz zumindest im oberen Abschnitt unterhalb des Absatzes axial geführt ist. So werden mit dieser Ausbildung zwei Effekte erzielt, nämlich eine herstellungs- und montagetechnisch einfache Lösung für den gehäusefesten Anschlag und eine außenseitige radiale

Abstützung des von der Gehäusewand sonst nicht abgestützten Einsatzes erreicht. Die eingesetzte Führungshülse erleichtert auch die Montage des Stellkolbens und des Einsatzes, weil der Stellkolben mit seiner radial vorspringenden Dichtlippe und dem Absatz behinderungsfrei in das Gehäuse eingeschoben werden können.

Die axiale Fixierung der Führungshülse kann nach einer Ausgestaltung in einem am Gehäuse festgelegten Widerlager erfolgen. Vorzugsweise weist die Führungshülse am topfrandseitigen Ende einen radialen Innenkragen auf, an der der Einsatz sich axial abstützt, und ist weiter von einer das Widerlager bildenden, am Gehäuse angeschraubten Überwurfmutter gehalten.

Für die Ausgestaltung des Einsatzes und des Stellkolbens gibt es zwei grundsätzliche Alternativen. Nach der ersten Alternative bestehen der Einsatz und der Stellkolben aus zwei Formteilen, die formschlüssig zusammengefügt sind. Diese Alternative hat vor allem bei komplexer Formgebung (wechselnde Wandstärke) fertigungs- und funktionstechnische Vorteile. So kann der Stellkolben aus einem formsteiferen Material als der Einsatz bestehen. Für die Erleichterung der Montage können diese beiden Formteile miteinander verklebt sein. Nach der zweiten Alternative sind der Einsatz und der Stellkolben als einteiliges Formteil ausgebildet.

Die erfindungsgemäße Hubwegbegrenzung des Stellkolbens lässt sich auch bei verschiedenen Flaschenkopfformaten realisieren. In diesem Fall ist nach einer Ausgestaltung der Erfindung an dem Stellkolben an dessen dem Druckraum abgewandten Seite ein formsteifes Verlängerungs- und Adapterstück für verschiedenformatige Einsätze anschließbar. Dieses Verlängerungs- und Adapterstück sitzt dann zwischen dem passenden Einsatz und dem Stellkolben. Gehalten wird der andersformatige Einsatz durch eine axial verlängerte Überwurfmutter. Wie der Stellkolben, kann bei eingesetztem Verlängerungs- und Adapterstück auch dieses am topfrandseitigen Ende eine Zentrierung für den Flaschenkopf aufweisen.

Im Folgenden wird die Erfindung anhand einer drei Ausführungsbeispiele darstellenden Zeichnung näher erläutert. Im Einzelnen zeigen:
- Fig. 1: eine auf einen Flaschenkopf gestülpte Packtulpe im Axialschnitt,
- Fig. 2: eine auf einen Flaschenkopf gestülpte Packtulpe im Axialschnitt in einer zur Fig. 1 anderen Ausführung und
- Fig. 3: eine auf einen Flaschenkopf gestülpte Packtulpe im Axialschnitt in einer zu Fig. 1 und 2 anderen Ausführung.

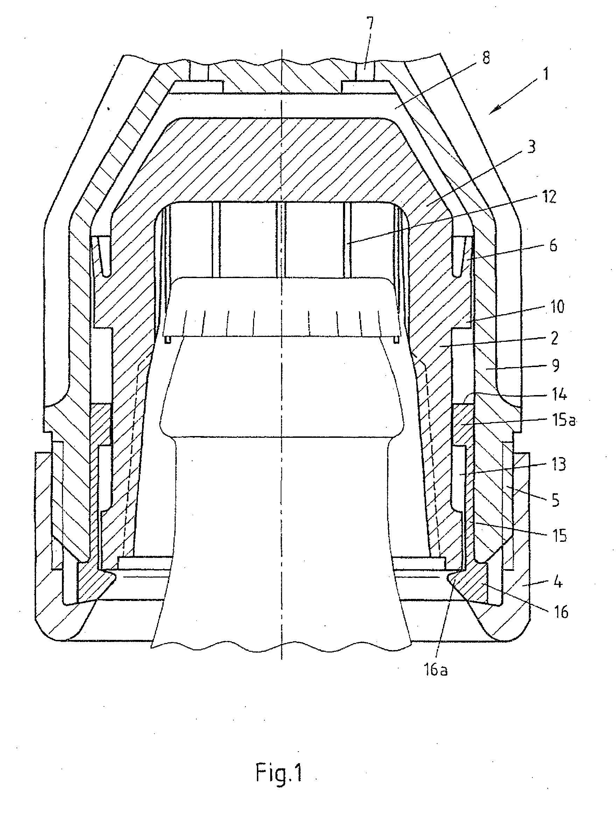

Die in Fig. 1 dargestellte Packtulpe weist ein topfförmiges Gehäuse 1 auf, in der ein elastisch verformbarer hülsenförmiger Einsatz 2 und ein Stellkolben 3 untergebracht sind. Der Einsatz 2 und der Stellkolben 3 bestehen aus thermoplastischem Kunststoff und sind einteilig ausgeführt. Sie werden durch eine Überwurfmutter 4 gehalten, die über ein Gewinde 5 am Gehäuse 1 festgeschraubt ist.

Der Stellkolben 3 weist an seinem Rand eine angeformte Dichtlippe 6 auf, die einen mit einem Druckmedium über Einlässe 7 beaufschlagbaren Druckraum 8 an der Innenseite einer Zylinderwand 9 des Gehäuses 1 abdichtet. Der Stellkolben 3 weist an seinem Umfang auf der dem Druckraum 8 abgewandten Seite der Dichtlippe 6 einen oder mehrere über den Umfang verteilte radiale Absätze 10 auf, der bzw. die mit der Dichtlippe 6 als integraler Kragen des Stellkolbens 3 ausgebildet ist bzw. sind.

Der Stellkolben 3 hat eine äußere Kegelstumpfform, die ihn formsteif macht. Innen ist der Stellkolben 3 hohl ausgebildet und weist radiale Rippen 12 auf, die der Zentrierung des Flaschenkopfes beim Ausstülpen der Packtulpe dienen.

Der Einsatz 2 kann vollwandig ausgebildet sein. Im Ausführungsbeispiel hat dessen Wand in Umfangsrichtung abwechselnd eine unterschiedliche Wandstärke, wie an sich bekannt. Diese auch bevorzugte Ausbildung der Wand 9 begünstigt das radiale Aufwölben des Einsatzes 2 bei seiner axialen Stauchung, und damit das gleichmäßige radiale Ergreifen des Flaschenkopfes.

Der Einsatz 2 ist mit Abstand zur Wand angeordnet. In dem so auch für die Hubbewegung des Stellkolbens 3 geschaffenen Freiraum 13 ist zur Hubbegrenzung des Stellkolbens 3 ein mit dem Absatz 10 zusammen wirkender gehäusefester Anschlag 14 vorgesehen. Dieser Anschlag 14 ist an der Stirnseite einer in den Freiraum 13 eingesetzten Führungshülse 15 ausgebildet, die von der Überwurfmutter 4 gehalten wird, indem ein am unteren Ende der Führungshülse 15 angeordneter innerer Kragen 16 zwischen der als Widerlager dienenden Überwurfmutter 4 und dem unteren Rand des Gehäuses 1 eingeklemmt ist. Die Führungshülse 15 mit ihrem gehäusefesten Anschlag 14 dient aber nicht nur der Hubbegrenzung des Stellkolbens 3, sondern auch mit einem an ihrem oberen Rand ausgebildeten inneren Kragen 15a dem Einsatz 2 als Führung, indem er sich am Kragen 15a rückseitig abstützt. Der eingeklemmte Kragen 16 der Führungshülse 15 weist einen radial nach innen gerichteten Absatz 16a auf, auf dem sich der Einsatz 2 mit seiner unteren Stirnseite abstützt.

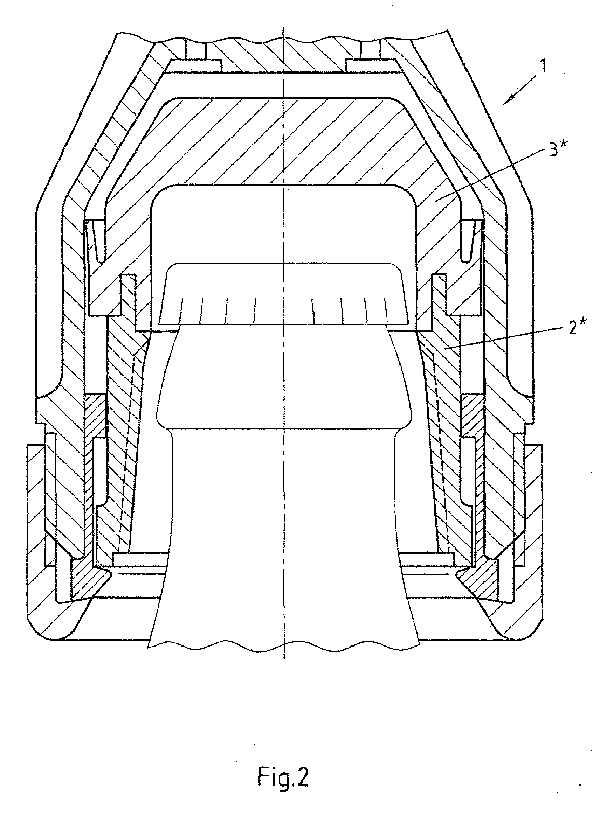

Die Packtulpe des Ausführungsbeispiels der Fig. 2 unterscheidet sich von der der Fig. 1 im wesentlichen nur darin, dass in diesem Fall der Einsatz 2* und der Stellkolben 3* nicht einstückig ausgebildet sind, sondern aus zwei formschlüssig ineinander gesteckten Formteilen bestehen.

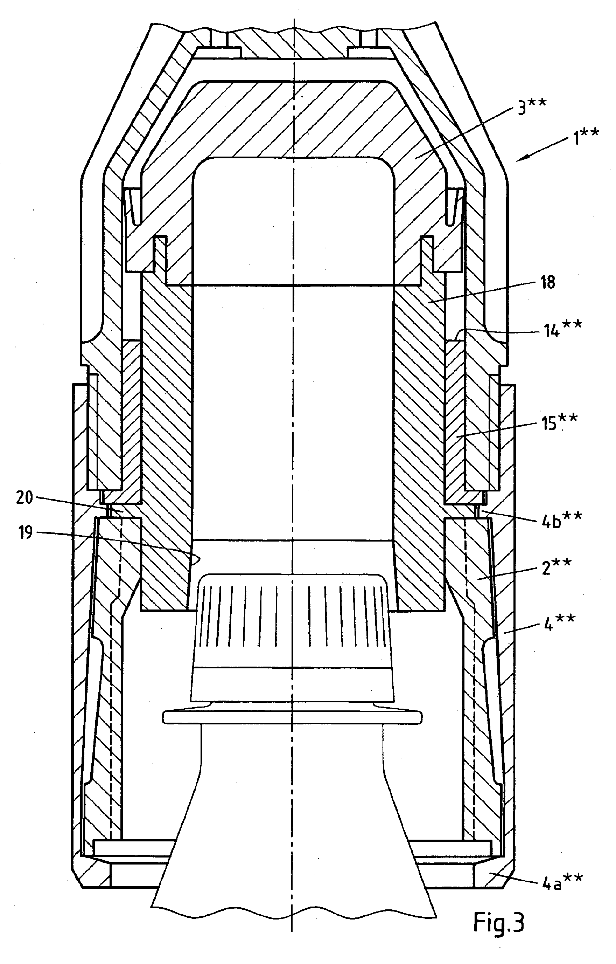

Das Ausführungsbeispiel der Fig. 3 unterscheidet sich von dem der Figuren 1 und 2 im wesentlichen darin, dass zwischen dem Einsatz 2** und dem Stellkolben 3** ein Verlängerungs- und Adapterstück 18 für verschiedenformatige Einsätze 2** eingesetzt ist. Der Einsatz 2** stützt sich mit seiner unteren Stirnseite an einem inneren Kragen 4a** der verlängerten Überwurfmutter 4** ab. Die Überwurfmutter 4** weist im oberen Bereich einen weiteren innenseitigen Kragen 4b** auf, an dem die Führungshülse 15** abgestützt ist. Das Verlängerungs- und Adapterstück 18 weist am unteren Rand eine Zentrierung 19 für den Flaschenkopf in Form einer konischen Aufweitung auf. Im unteren Bereich weist es ferner einen außenseitigen Kragen 20 auf, über den die axiale Druckkraft des Stellkolbens 3** auf die obere Stirnseite des Einsatzes 2** übertragen wird.

Ein Vergleich dieses Ausführungsbeispiels mit dem der Fig. 2 zeigt, dass bei gleichen äußeren Abmessungen der Packtulpe der lichte Aufnahmeraum des Einsatzes 2** für den Flaschenkopf vergrößert ist.

## Patentansprüche

1. Packtulpe zum kopfseitigen Ergreifen von insbesondere durch einen Verschluss verschließbaren Flaschen, die in einem topfförmigen Gehäuse (1, 1**) einen hülsenförmigen, mit seinem vorderseitigen Ende am Rand des Gehäuses (1) abgestützten, elastisch verformbaren Einsatz (2, 2**) und einen auf den Einsatz (2, 2**) an dessen rückseitigem Ende mit einer axialen Druckkraft einwirkenden Stellkolben (3, 3**) aufweist, der mit einer randseitigen Dichtlippe (6) innen an der Wand (9) des einen zugehörigen, mit einem Druckmedium beaufschlagbaren Druckraum (8) bildenden topfförmigen Gehäuses (1, 1**) anliegt, wobei der Stellkolben (3, 3**) an seinem Umfang auf der dem Druckraum (8) abgewandten Seite der Dichtlippe (6) einen radialen Absatz (10) aufweist, dem als axiale Hubbegrenzung des Stellkolbens (3, 3**) ein gehäusefester Anschlag (14) im Bereich des Einsatzes (2, 2**) zugeordnet ist,
**dadurch gekennzeichnet dass** die Dichtlippe (6) und der Absatz (10) als integraler Kragen des Stellkolbens (3, 3**) ausgebildet sind, wobei der elastische Einsatz (2, 2**) an seinem unteren Rand einen radial nach außen weisenden Kragen aufweist, wobei die Wand des Einsatzes (2) mit in Umfangsrichtung abwechselnd unterschiedlicher Wandstärke ausgebildet ist, wobei sich die Wandstärke der verstärkten Wandbereiche der Wand vom stellkolbenseitigen Ende des Einsatzes (2) in Richtung seines dem Flaschenkopf zugewandten unteren Randes bis zum radial nach außen weisenden Kragen verringert und wobei der Stellkolben (3) innen hohl ausgebildet ist und radiale Rippen (12) zur Zentrierung des Flaschenkopfes beim Ausstülpen der Packtulpe aufweist.

2. Packtulpe nach Anspruch 1,
**dadurch gekennzeichnet dass**, der Stellkolben (3, 3*, 3**) einen kegelförmigen Boden hat.

3. Packtulpe nach Anspruch 1 oder 2,
**dadurch gekennzeichnet dass**, der gehäusefeste Anschlag (14) an der Stirnseite einer im Gehäuse (1) eingesetzten Führungshülse (15) ausgebildet ist, an deren Innenseite der Einsatz (2) zumindest im oberen Abschnitt unterhalb des Absatzes (10) axial geführt ist.

4. Packtulpe nach Anspruch 3,
**dadurch gekennzeichnet dass,** die Führungshülse (7) an einem am Gehäuse (1) festgelegten Widerlager (4) abgestützt ist.

5. Packtulpe nach Anspruch 4,
**dadurch gekennzeichnet dass**, die Führungshülse (15) am topfrandseitigen Ende einen radialen Innenkragen (16a) aufweist, an der der Einsatz (2) sich axial abstützt, und von einer das Widerlager bildenden, am Gehäuse (1) angeschraubten Überwurfmutter (4) gehalten ist.

6. Packtulpe nach einem der Ansprüche 1 bis 5,
**dadurch gekennzeichnet dass**,
an dem Stellkolben (3**) an dessen dem Druckraum abgewandten Seite ein formsteifes Verlängerungs- und Adapterstück (18) für verschiedenformatige Einsätze anschließbar ist.

7. Packtulpe nach Anspruch 6,
**dadurch gekennzeichnet dass,** das Verlängerungs- und Adapterstück (18) am topfrandseitigen Ende eine Zentrierung (20) für den Flaschenkopf aufweist.

8. Packtulpe Ansprüche 6 oder 7,
**dadurch gekennzeichnet dass,** der gehäusefeste Anschlag (14**) an der Stirnseite einer im Gehäuse (1**) im Bereich des Verlängerungs- und Adapterstückes (18) eingesetzten Führungshülse (15**) ausgebildet ist, an deren Innenseite das Verlängerungs- und Adapterstück (18) axial geführt ist.

## Claims

1. A packing tulip gripper for gripping the tops of bottles, in particular, closable with a closure, which in a pot-shaped housing (1, 1**) has an elastically deformable insert (2, 2**) supported with its front end on the edge of the housing (1), and an actuator piston (3, 3**) which exerts an axial pressure force on the insert (2, 2**) on the rear end of the insert (2, 2**), and which with a marginal sealing lip (6) is internally in contact with the wall (9) of the pot-shaped housing (1, 1**) which forms a pressure room (8) subjectable to a pressure medium, wherein the actuator piston (3, 3**) on its circumference has a radial projection (10) on the side of the sealing lip (6) facing away from the pressure space (8) to which a stop (14) fixed to the housing is assigned in the region of the insert (2, 2**) as an axial stroke limiter (14) for the actuator piston (3, 3**),
**characterised in that**
the sealing lip (6) and the projection (10) are designed as an integral collar of the actuator piston (3, 3**), wherein the elastic insert (2, 2**) at its lower edge has a collar pointing radially outwards, wherein the wall of the insert (2) is designed with a wall thickness that alternately differs in the circumferential direction, wherein the wall thickness of the reinforced wall areas of the wall decreases from the end of the insert (2) on the actuator piston side in the direction of its lower end facing the top of the bottle up to the collar pointing radially outwards and wherein the actuator piston (3) is hollow inside and has radial ribs (12) for centring the top of the bottle on eversion of the packing tulip gripper.

2. The packing tulip gripper according to claim 1,
**characterised in that** the actuator piston (3, 3*, 3**) has a conical base.

3. The packing tulip gripper according to claim 1 or 2
**characterised in that** the stop (14) fixed to the housing is formed on the face side of a guide sleeve (15) inserted in a housing (1) on the inside of which the insert (2) at least in the upper section is axially guided below the projection (10).

4. The packing tulip gripper according to claim 3
**characterised in that** the guide sleeve (15) is supported on an abutment (4) formed on the housing (1).

5. The packing tulip gripper according to claim 4
**characterised in that** on the pot edge-sided end the guide sleeve (15) has a radial inner collar (16a) on which the insert (2) is axially supported and held by a union nut (4) screwed onto the housing (1) and forming the abutment.

6. The packing tulip gripper according to any one of claims 1 to 5
**characterised in that**
a rigid extension and adapter piece (18) for different insert formats can be connected to the adjusting piston (3**) on the side of the adjusting piston (3**) facing away from the pressure space.

7. The packing tulip gripper according to claim 6
**characterised in that**
on the pot edge-sided end, the extension and adapter piece (18) has a centring element (20) for the top of the bottle.

8. The packing tulip gripper according to claim 6 or 7
**characterised in that** the stop (14**) affixed to the housing is formed on the end face of a guide sleeve (15**) which is inserted in the area of the extension and adapter piece (18) and on the inner side of which the extension and adapter piece (18) is axially guided.

## Revendications

1. Tulipe d'emballage pour la saisie au niveau de la tête de bouteilles pouvant en particulier être fermées par un bouchon, qui présente, dans un boîtier en forme de marmite (1, 1**), un insert (2, 2**) en forme de manchon s'appuyant par son extrémité avant sur le bord du boîtier (1) et déformable élastiquement et un piston de réglage (3, 3**) agissant sur l'insert (2, 2**), à son extrémité arrière, par une force de compression axiale et qui repose par une lèvre d'étanchéité (6) située au niveau du bord sur l'intérieur de la paroi (9) du boîtier (1, 1**) en forme de marmite en faisant partie et formant une chambre sous pression (8) pouvant être sollicitée avec un fluide sous pression, le piston de réglage (3, 3**) présentant sur sa circonférence, sur la face détournée de la chambre sous pression (8) de la lèvre d'étanchéité (6), un talon radial (10) auquel une butée (14) fixe sur le boîtier est associée en tant que limite de course axiale du piston de réglage (3, 3**) au niveau de l'insert (2, 2**),
**caractérisée en ce que**
la lèvre d'étanchéité (6) et le talon (10) sont réalisés sous forme de collerette intégrée du piston de réglage (3, 3**), l'insert élastique (2, 2**) présentant sur son bord inférieur une collerette tournée radialement vers l'extérieur, la paroi de l'insert (2) étant réalisée avec une épaisseur de paroi alternativement différente dans le sens circonférentiel, l'épaisseur de paroi de la partie renforcée de la paroi de l'extrémité située du côté du piston de réglage de l' insert (2) étant réduite en direction de son bord inférieur tourné vers la tête de la bouteille jusqu'à la collerette tournée radialement vers l'extérieur et le piston de réglage (3) ayant intérieurement une conformation creuse et présentant des nervures radiales (12) pour le centrage de la tête de bouteille lors du déboîtement de la tulipe d'emballage.

2. Tulipe d'emballage selon la revendication 1,
**caractérisée en ce que**
le piston de réglage (3, 3*, 3**) a un fond de forme conique.

3. Tulipe d'emballage selon la revendication 1 ou 2,
**caractérisée en ce que**
la butée (14) fixe sur le boîtier est réalisée sur la face frontale d'un manchon de guidage (15) inséré dans le boîtier (1) et sur la face interne duquel l'insert (2) est guidé axialement du moins dans la section supérieure en-dessous du talon (10).

4. Tulipe d'emballage selon la revendication 3,
**caractérisée en ce que**
le manchon de guidage (15) s'appuie sur un contre-palier (4) fixé au boîtier (1).

5. Tulipe d'emballage selon la revendication 4,
**caractérisée en ce que**
le manchon de guidage (15) présente, sur son extrémité située du côté du bord de la marmite, une collerette radiale interne (16a) sur laquelle l'insert (2) s'appuie axialement et est maintenu par un écrou chapeau (4) vissé sur le boîtier (1) et formant le contre-palier.

6. Tulipe d'emballage selon une des revendications 1 à 5,
**caractérisée en ce que,**
sur le piston de réglage (3**), sur sa face détournée de la chambre sous pression, peut être raccordée une pièce de prolongation et d'adaptation de forme rigide (18) pour des inserts de formats divers.

7. Tulipe d'emballage selon la revendication 6,
**caractérisée en ce que**
la pièce de prolongation et d'adaptation (18) présente, à son extrémité située du côté du bord de la marmite, un élément de centrage (20) pour la tête de la bouteille.

8. Tulipe d'emballage selon la revendication 6 ou 7,
**caractérisée en ce que**
la butée (14**) fixe sur le boîtier est réalisée sur la face frontale d'un manchon de guidage (15**) inséré dans le boîtier (1**) au niveau de la pièce de prolongation et d'adaptation (18) et sur la face interne duquel la pièce de prolongation et d'adaptation (18) est guidée axialement.
